# EUROPEAN PATENT APPLICATION

(11) **EP 1 707 337 A1**
(43) Date of publication of application: **04.10.2006**
(21) Application number: 05447074.5
(22) Date of filing: 01.04.2005
(51) Int. Cl.: B29C 47/04, B29C 47/58, B32B 27/08, B32B 27/20

(54) **Co-extruded multi-layer foil comprising different polymers**

(71) Applicant: RPC Cobelplast, 9160 Lokeren (BE)
(72) Inventor: Van Iseghem, Tino, 9112 Sinaai (BE); Degraeve, Ronald, 8700 Tielt /Aarsele) (BE)
(74) Representative: Luys, Marie-José A.H.

(57) **Abstract**

The present invention relates to a multi-layer foil, comprising a lower layer (A) and an upper layer (B), which upper layer comprises a multiplicity of bands (11, 12, 13, 14, 15, 16) which extend in longitudinal direction of the multi-layer foil, adjacent bands being produced in a different colour. The lower layer (A) comprises a co-extruded foil of at least two different polymers, in that the lower layer (A) comprises a top layer (2) on top of which the upper layer (B) is co-extruded.

## Description

The present invention relates to a striped foil, in particular a co-extruded multi-layer foil comprising a lower layer, which lower layer comprises at least two different polymers, and an upper layer, which upper layer comprises a plurality of bands, which extend in longitudinal direction of the multi-layer foil, wherein adjacent bands are produced in a different colour, according to the preamble of the first claim.

It is known from the art to provide the surface of a multi-layer co-extruded barrier foil produced in a first colour, with a surface layer comprising a multiplicity of parallel bands, wherein adjacent bands have a different colour and extend in longitudinal direction of the foil. It is in particular known to produce in an alternating manner, one band in de colour of the underlying co-extruded foil and one band in a different colour. This second colour is applied to the co-extruded foil by printing ink in the second colour on top of the layer produced in the first colour. Such foils are for example used in the production of containers for individual food portions, wherein for example a first part of the container is produced in the first colour and another part is produced in the second colour. However it has been found that after thermoforming of such a printed foil in the desired shape, the quality of the covering of the printed layer is insufficient and that the colour of the layer underneath becomes visible through the second colour.

This invention therefore has the object of providing a multi-layer plastic foil, the bottom layer of which comprises at least two different co-extruded polymers and the surface of which comprises a multiplicity of parallel bands, which are alternating produced in at least two colours.

From EP-A-136.959 in the name of Siamp Cedap Réunies, a co-extruded multi-layer plastic foil is known in which the different superimposed layers are made of the same polymer, for example polystyrene, and where the foil consists of
1. a first bottom layer of a carrier
2. on top of which a second layer is applied which consists of a multiplicity of adjacent layers in a different colour which extend in longitudinal direction of the foil
3. wherein the second top layer is covered with a transparent top layer. The device used in the production of such a foil comprises a flat extrusion slit, which is fed by five channels, namely a first channel for the plastic forming the opaque bottom layer, a second channel for the transparent plastic material of the top layer, and three channels for supplying three colorants. Each of these channels divides in two supply channels, so that a foil is produced with six adjacent coloured bands. The exit of each of these channels gives access to a next channel along which the molten plastic for the basic layer is supplied. This next channel in turn gives access to an end channel through which the molten plastic for the transparent top layer is supplied. EP-A-136.959 does however not disclose to produce the layer as a co-extruded multi-layer foil built up of different polymers.

It is the object of the present invention to provide a multi-layer plastic foil, the bottom layer of which comprises at least two different co-extruded polymers and the surface of which is provided with a plurality of parallel bands which are produced in at least two colours in an alternating manner, with which an improved covering of the colours is obtained, as well as to provide a method for producing such a foil.

The object of this invention is achieved with a multi-layer foil showing the technical features of the characterising portion of the first claim. Thereto, the multi-layer foil of the present invention comprises a co-extruded lower layer and upper layer, wherein the lower layer comprises a first co-extruded multi-layer foil of at least two different polymers and wherein the lower layer comprises a top layer on top of which the upper layer is co-extruded.

By co-extruding the bands of the upper layer with the lower layer, a decorative multi-layer foil is provided with an improved decorative effect, which at the same time shows barrier properties. The conservative properties of such a foil with respect to food contained in the foil are not adversely affected by co-extruding the coloured bands.

A preferred embodiment of this invention is characterised in that the top layer of the lower layer and the upper layer contain the same plastic material, to optimise the adhesion of the upper layer to the lower layer.

In case it is intended to use the multi-layer foil of this invention in specific applications, wherein it is preferred that the foil constitutes a barrier against for example gas, oxygen, CO₂, water vapour, aroma's or light, the lower layer preferably comprises a barrier foil of two or more different co-extruded plastic materials.

The present invention also relates to a method for producing the above-described foil. In the method of this invention, at least a first and second polymer, which are different from each other, are transferred into a plastic state preferably in a first and second extruder, and conducted through a supply channel connected to the first and second extruder screw, to a first nozzle for forming a first stream of superposed material flows which are conducted to a lamination mould. A part of the slow of the second material produced in a first colour is diversed to a nozzle for forming a second flow for the striped upper layer. An amount of the second material in the second colour is preferably transformed into the plastic state and conducted to a second nozzle, which is designed for selectively transmitting the second material in the first and second colour in width direction of the foil to form the band pattern. The second flow is supplied on top of the first flow, after which both superimposed flows are extruded simultaneously in the lamination mould, to form the striped multi-layer foil.

The invention is further elucidated in the added figures and description of the figures.
Figure 1 shows a perspective view to the co-extruded multi-layer foil of this invention.
Figure 2 shows a perspective view to an alternative embodiment of this invention.

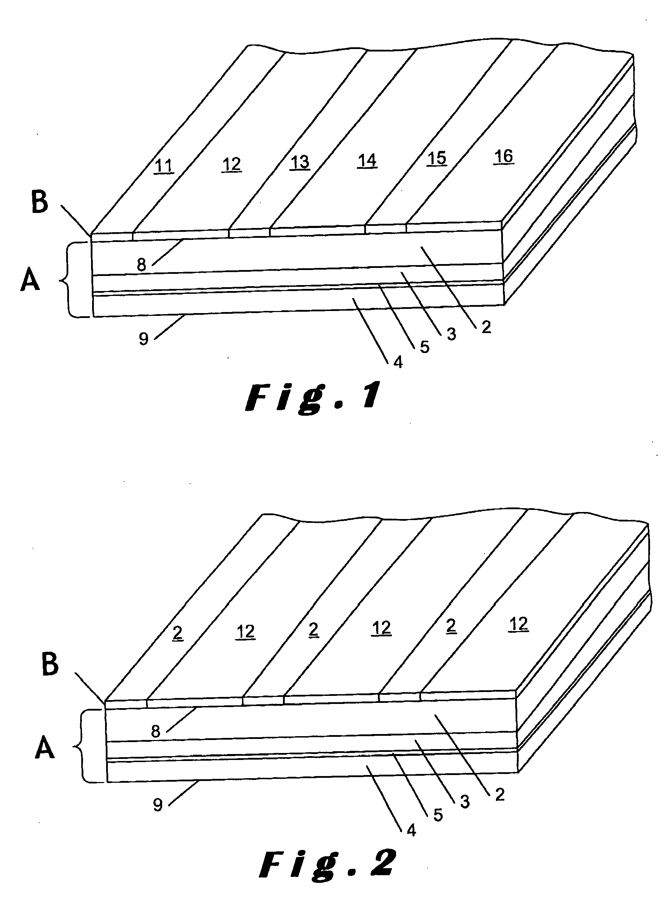

The embodiment of the co-extruded multi-layer foil of this invention shown in figure 1 comprises a bottom layer or lower layer A and a top layer or upper layer B. If so desired, two or more lower layers A and/or upper layers B may be present. The co-extruded multi-layer foil of this invention can also be produced as a foil with a lower layer A, wherein the lower layer A comprised a top face 8 and a bottom face 9, wherein on both the bottom face and the top face 8 a layer is present which has been co-extruded with the lower layer, and which comprises a multiplicity of bands, wherein adjacent bands are produced in a different colour. Within the frame of this invention a transparent layer is considered to be a coloured layer as well. In this way a two-sided decorative foil is obtained. The dimensions of the co-extruded multi-layer foil, in particular, thickness, length and width are not critical to this invention and can be varied within wide ranges, depending on the envisaged application.

In case it is the aim to use the co-extruded multi-layer foil of this invention for specific applications, wherein it is desirable to for example limit the permeability of gas, oxygen, CO₂, water, water vapour, aroma's or light, the lower layer preferably comprises a barrier foil of two or more different co-extruded plastic materials. Such a barrier foil preferably comprises two or more different co-extruded materials selected from the group of polypropylene, polyethylene, high density polyethylene, low density polyethylene, polystyrene, polyvinyl alcohol, polyethylvinyl alcohol, polyvinylidenechloride, polyethylene-tereftalate, polyester, co-polyester. A barrier foil made of one or more of these materials has excellent deep draw and welding properties, shows a good stability and printability, a good compatibility with a wide number of colorants and a is highly neutral to a wide variety of products.

In case superimposed layers 2, 3 are produced in different materials, which show a good affinity to each other, usually a good adhesion is obtained. With a poor adhesion it is possible to apply a glue layer 5 between two subsequent layers 3, 4 in view of improving adhesion. Thereby the glue 5 is preferably extruded simultaneously with the plastic materials for the layers 2, 3, 4.

Examples of suitable co-extruded multi-layer foils for use as lower layers are: co-extruded polystyrene-polypropylene; polystyrene-modified polyester; modified polyester-polystyrene-modified polyester; polystyrene-polyethylene-polystyrene; polystyrene-polyethylene; polystyrene-polyethylvinyl alcohol-polystyrene; polystyrene-polyvinylidenechloride-polystyrene; polystyrene-polyethylvinyl alcohol-polyethylene-polypropylene; polystyrene-polyvinylidenechloride-polyethylene-polypropylene; polypropylene-ethyl vinyl alcohol-polypropylene.

In the foil of the present invention, upper layer B is extruded simultaneously with lower layer A.

An optimum adhesion of the colours is obtained in case the top layer 2 of lower layer A and the upper layer B are based on the same plastic material. Within the framework of this invention this means that the top layer 2 and upper layer B may be made of the same plastic material. Within the framework of this invention this also means that the top layer may be made of a first blend of two or more plastic materials and that the upper layer B may be made of a second blend of two or more plastic materials, wherein at least one of the plastic materials of the first and second blend is the same. A further improvement of the colour intensity is obtained when the top layer 2 of the lower layer A and at least one of the bands of upper layer B are made of the same colour as is shown in figure 2.

The upper layer B comprises two or more bands 11-16, which extend in longitudinal direction of the co-extruded foil A. The upper layer B may be produced in two or more colours, depending on the application envisaged for the foil. In that way it is for example possible to have bands 11, 13 and 15 made of a first colour, and bands 12, 14, 16 of a second colour, for example the colour of the lower layer A. Also the dimensions of the bands 11-16 may be adapted depending on the envisaged application.

Co-extrusion is a technique, which has been known for some time for the manufacturing of multi-layer foils. Also devices for producing the co-extruded foils are known as such. The technique is for example described in NL-A-7213049 in the name of The Dow Chemical Company. A device for manufacturing a co-extruded foil comprises two or more extruder screws for heating and plasticizing of two or more thermoplastic, extrudable materials. Each of the extrusion screws is connected to a nozzle through a supply channel. The nozzle is provided for supplying extrudable materials to an outlet, which comprised a multiplicity of mainly parallel running supply slits for supplying extrudable material to the mould. The supply slits are positioned on top of one another in height direction of the foil, so that a multi-layer flow of super imposed layers of thermoplastic material are supplied to the entrance of the lamination mould for extruding the multi-layer foil. The mould comprises a supply for the superimposed layers of thermoplastic material and a mould plenum, which is connected to an extrusion slit.

A second supply channel for forming the striped upper layer gives access to the first supply channel, at a position between the nozzle and the entrance of the lamination mould. This second supply channel is provided for supplying a striped monolayer on top of the multi-layer flow. The second supply channel is fed by two or more flows originating from two or more extrusion screws. The two or more flows come together at the position of an index plate, for distributing the material of the two or more flows in width direction of the foil. The striped flow thus obtained is conducted through the second supply channel on top of the flow of the first supply channel and from there to the lamination mould.

The device may be simplified in case the co-extruded multi-layer foil for example comprises stripes in only two colours, where one colour corresponds to the colour of the top layer 2 of the lower layer A. In that case the supply for forming the stripes can be fed by the extrusion screw for top layer 2, through a branch pipe.

When manufacturing the foil shown in figure 2, the materials 2, 3, 4, 5 are converted into the plastic state in the extruder screws and conducted to the nozzle through the respective supply channels, to form a first stream of superimposed material flows 2, 3, 4, 5 which are conducted to the lamination mould through the supply channel. A part of the material flow 2 is diversed in the direction of the nozzle for forming a second flow for the striped upper layer B. Material 12, the second material for the striped upper layer B is converted into the plastic state in the extruder screw and is also conducted the nozzle which is designed for to selectively admit a flow of material 2 and 12 in width direction of the second flow or foil for forming the striped pattern in width direction of the foil. At a position in front of the entrance of the lamination mould, the second flow is supplied on top of the first flow, after which both superposed flows are conducted to the lamination mould for the simultaneous extrusion of all layers, in view of forming the striped multi-layer foil.

## Claims

1. A multi-layer foil, comprising a lower layer (A) and an upper layer (B), which upper layer comprises a multiplicity of bands (11, 12, 13, 14, 15, 16) which extend in longitudinal direction of the multi-layer foil, adjacent bands being produced in a different colour, **characterised in that** the lower layer (A) comprises a co-extruded foil of at least two different polymers, **in that** the lower layer (A) comprises a top layer (2) on top of which the upper layer (B) is co-extruded.

2. A multi-layer foil according to claim 1, **characterised in that** the top layer (2) and upper layer (B) comprise the same plastic material.

3. A multi-layer foil according to claim 1 or 2, **characterised in that** the lower layer (A) comprises a barrier foil of two or more different co-extruded plastic materials (2, 3, 4, 5).

4. A multi-layer foil according to claim 3, **characterised in that** the barrier foil comprises two or more plastic materials selected from the group of polypropylene, polyethylene, high density polyethylene, low density polyethylene, polystyrene, polyvinyl alcohol, polyethylvinyl alcohol, polyvinylidenechloride, polyethyleneterephtalate, polyester, co-polyester.

5. A multi-layer foil according to any one of claims 1-4, **characterised in that** the lower layer (A) and at least one of the bands (11) of the upper layer (B) are produced in the same colour.

6. A method for producing the multi-layer foil of any one of claims 1-5, **characterised in that** at least a first and a second different polymer (2, 3, 4, 5) are converted in to the plastic state and conducted to a first nozzle for forming a first flow of superposed material flows which are conducted to a lamination mould, wherein a part of the flow of the second material produced in a first colour is diversed to a nozzle for forming a second flow for the striped upper layer (B), and wherein a part of the second material produced in the second colour is converted into the plastic state and conducted to a second nozzle designed to selectively admit the second material in the first and second colour in width direction of the foil to form the stripes of the pattern, wherein the second flow is supplied on top of the first flow, after which both superposed flows are simultaneously extruded in the lamination mould to form the striped multi-layer foil.
